# FASCICULE DE BREVET EUROPEEN

(11) **EP 0 991 496 B1**
(45) Date de publication et mention de la délivrance du brevet: **16.07.2003**
(21) Numéro de dépôt: 99914602.0
(22) Date de dépôt: 16.04.1999
(51) Int. Cl.: B23Q 35/26, B24B 9/14

(54) **PROCEDE ET APPAREIL DE PALPAGE DE MONTURES DE LUNETTES, ET MACHINE DE MEULAGE CORRESPONDANTE**
VERFAHREN UND VORRICHTUNG ZUM ABTASTEN VON BRILLENGESTELLEN UND SCHLEIFMASCHINE DAFÜR
METHOD AND APPARATUS FOR SENSING SPECTACLE FRAMES, AND CORRESPONDING GRINDING MACHINE

(30) Priorité: 27.04.1998 FR 9805263
(43) Date de publication de la demande: 12.04.2000
(73) Titulaire: BRIOT INTERNATIONAL, 27340 Pont de l'Arche (FR)
(72) Inventeur: VIDECOQ, Jean-Jacques, F-76570 Pavilly (FR); BONBONY, Stéphane, Pascal, Bertrand, F-76120 Le Grand Quevilly (FR)
(74) Mandataire: Moncheny, Michel
(86) Numéro de dépôt international: FR9900903
(87) Numéro de publication internationale: WO99055490

(56) Documents cités:
- EP-A- 0 143 468
- EP-A- 0 819 967
- FR-A- 2 270 989
- FR-A- 2 637 830
- FR-A- 2 754 356
- US-A- 5 615 486

## Description

La présente invention est relative à un procédé de palpage d'un drageoir d'un cercle de monture de lunettes, en vue de fournir des données représentatives du contour du drageoir à une machine de meulage de verres de lunettes qui comprend une meule de biseautage ayant une gorge de biseautage de profil standard, procédé du type décrit dans le préambule de la revendication 1.

L'invention concerne également un appareil de palpage destiné à la mise en oeuvre d'un tel procédé, ainsi qu'une machine de meulage de verres de lunettes équipée d'un tel appareil.

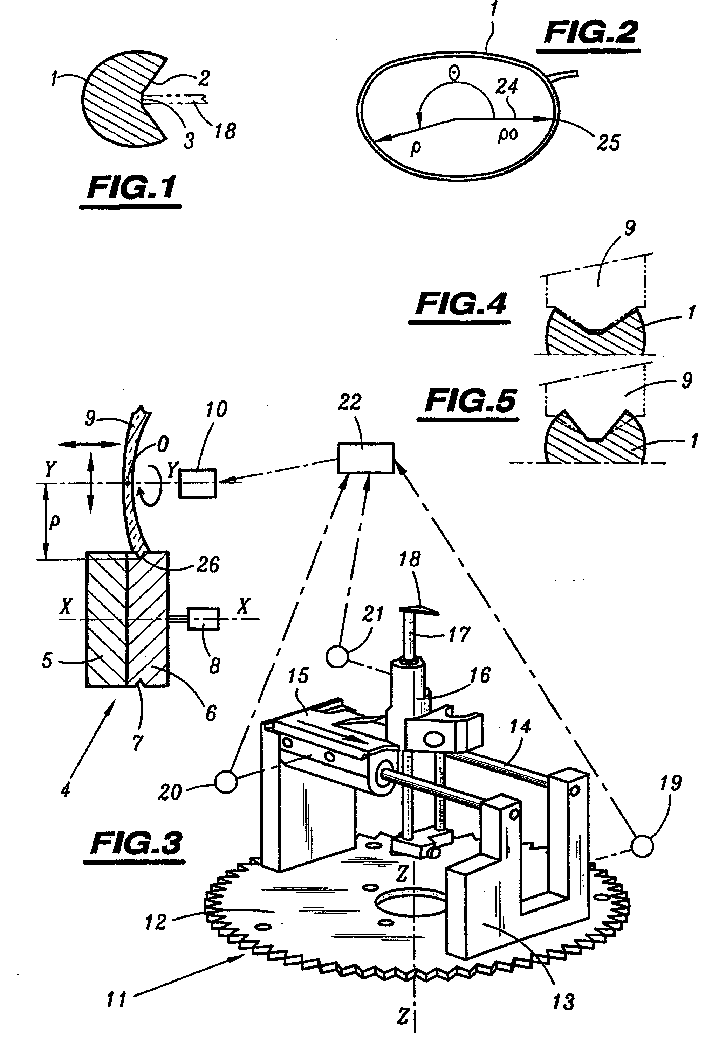

Le contexte et le problème de base de l'invention seront tout d'abord expliqués en regard des Figures 1 à 3 des dessins annexés.

La Figure 1 représente la section d'un cercle 1, en métal ou en matière plastique, d'une monture de lunettes, et la Figure 2 représente le même cercle 1 en vue de face.

Comme on le voit sur la Figure 1, le cercle 1 comporte sur son pourtour intérieur une gorge ou drageoir 2 en V ouvert à 120°, à fond plat 3.

La Figure 3 représente schématiquement en perspective les parties concernées par l'invention d'une machine classique de meulage de verres de lunettes :
- Un train de meules 4 dont l'axe horizontal X-X est solidaire du bâti (non représenté) de la machine. Ce train de meules comprend au moins une meule d'ébauche 5 à surface extérieure sensiblement cylindrique, et une meule de biseautage 6 munie d'une gorge standard 7 en V ouvert à 120°. On a indiqué en 8 le moteur d'entraînement du train de meules.
- Un chariot porte-verre, schématisé par son axe horizontal Y-Y parallèle à l'axe X-X. On a indiqué par O le centre d'un verre à meuler 9 maintenu sur le chariot par un mandrin en deux parties (non représenté) qui s'étend suivant l'axe Y-Y et fait partie du chariot. Dans cet exemple, le centre O est situé sur l'axe Y-Y.
- Des moyens électroniques 10 de commande du chariot. Ces moyens, pendant l'opération de biseautage, commandent le déplacement du point O suivant l'axe Y-Y et perpendiculairement à celui-ci, comme indiqué par des flèches, en fonction de la position angulaire du verre, lequel est entraîné en rotation relativement lente autour de l'axe Y-Y par un moteur approprié (non représenté).
- Un appareil de palpage 11, qui peut être intégré à la machine ou porté par un bâti séparé. Un tel appareil est classique et est commercialisé sous la marque déposée SCANFORM par la société BRIOT International.

L'appareil 11 comprend : un plateau circulaire horizontal 12 rotatif autour de son axe vertical Z-Z; un châssis 13 fixé sur ce plateau et muni de tiges parallèles et horizontales 14 situées de part et d'autre d'un diamètre du plateau 12; un coulisseau 15 monté mobile sur les tiges 14; un manchon vertical 16 fixé sur le coulisseau 15; une tige porte-palpeur 17 montée coulissante dans le manchon 16; et un palpeur 18 fixé à l'extrémité supérieure de la tige 17.

Le palpeur 18 est un palpeur dit "fin", c'est-à-dire que, au moins dans sa partie active, il a la forme d'une pointe dont l'épaisseur verticale est inférieure à celle du fond 3 du drageoir 2, comme on le voit en traits mixtes sur la Figure 1.

L'appareil 11 comporte encore des moyens de déplacement dont la fonction apparaîtra ci-dessous, un capteur 19 de l'angle de rotation du plateau 12, un capteur 20 de la position du coulisseau 15 le long du diamètre correspondant du plateau, et un capteur 21 de la position verticale du palpeur 18. Ces capteurs envoient des signaux correspondants à une unité électronique 22 qui pilote les moyens de commande 10. Il est bien entendu prévu des interfaces appropriées entre les éléments électroniques de l'ensemble.

De façon classique, on procède comme suit.

Le cercle de monture 1 est positionné au-dessus de l'appareil 11, au moyen de pinces appropriées, schématisées en 23 sur les Figures 10 à 12. De telles pinces sont par exemple décrites dans le FR-A-2 754 356 de la Demanderesse.

Puis le plateau 12 est amené à une position angulaire de départ prédéterminée, indiquée en 24 sur la Figure 2. La tige 17 est amenée suivant l'axe Z-Z par déplacement du coulisseau 15, et le palpeur est amené sensiblement au niveau du drageoir. Le coulisseau 15 est alors poussé, avec une force constante prédéterminée, typiquement de 60 gf, en éloignement de l'axe Z-Z, jusqu'à ce que la pointe du palpeur 18 soit au contact, au point 25 (Figure 2), du fond du drageoir, comme illustré sur la Figure 1.

Les moyens de déplacement vertical de la tige 17 comprennent un disque de friction qui coopère avec cette tige lorsqu'elle est confondue avec l'axe Z-Z. Dès que la tige 17 quitte cette position, elle peut se déplacer verticalement par coulissement sous l'effet d'une force verticale, tout en restant immobile, en l'absence d'une telle force, grâce à un contrepoids (non représenté) dont elle est munie.

Pour cette position angulaire θ = 0 du plateau, les capteurs 20 et 21 mesurent le déplacement radial ρ₀ du coulisseau 15 ainsi que le niveau z₀ du palpeur.

Puis on fait tourner le plateau 12 sur un tour complet, le palpeur étant en permanence appliqué avec la force constante précitée dans le drageoir 2. Les capteurs 19 à 21 fournissent ainsi à l'unité 22 un ensemble de triplets (θ, ρ, z) qui représentent la forme spatiale du drageoir.

A partir de ces informations, transmises aux moyens de commande 10, le verre 9 destiné à équiper le cercle de monture 1 sera ébauché par la meule 5, puis biseauté par la meule 6. La commande du chariot porte-verre sera telle que l'arête 26 du biseau se trouve à chaque instant à la distance ρ de l'axe Y-Y qui correspond à la position angulaire θ du verre par rapport à sa position d'origine.

Si le drageoir 2 a effectivement une ouverture de 120° ou une ouverture supérieure, le verre s'adaptera parfaitement dans le cercle 1 (Figure 4). Si en revanche cette ouverture est inférieure à 120°, le verre interférera avec la monture (Figure 5) et ne pourra pas être monté. Il faudra alors reprendre le verre et effectuer une opération de retouche.

Pour éviter cette manipulation supplémentaire, il a été proposé (FR-A-2 637 830) d'utiliser un palpeur épais ayant le profil en V à 120° de la gorge de biseautage 7. Le verre s'adapte alors avec certitude dans le drageoir, mais au prix des deux inconvénients suivants :
- d'une part, le palpeur épais tend à sortir du drageoir pendant le palpage, sauf si l'on exerce sur lui une force accrue, qui risque alors de déformer le cercle de monture;
- d'autre part, l'usure rapide du palpeur modifie son profil, de sorte que l'angle de 120° n'est plus garanti, ce qui nuit à la précision du palpage.

L'invention a pour but de permettre de façon fiable et économique la réalisation d'un palpage supprimant la nécessité d'une reprise du verre après biseautage, quelle que soit l'ouverture du V du drageoir ou même la forme de sa section.

A cet effet, l'invention a pour objet un procédé de palpage du type indiqué au début, caractérisé par la partie caractérisante de la revendication 1.

Ce procédé peut comporter l'une et/ou l'autre des caractéristiques décrites dans les revendications 2 et 3.

L'invention a également pour objet, de façon corrélative, un appareil de palpage de montures de lunettes tel que décrit dans la revendication 4.

Cet appareil peut comporter une ou plusieurs des caractéristiques des revendications 5 à 8, prises isolément suivant toutes leurs combinaisons techniquement possibles.

L'invention a encore pour objet une machine de meulage de verres de lunettes telle que décrite dans la revendication 9.

L'appareil de palpage peut notamment être intégré à la machine.

Un exemple de mise en oeuvre de l'invention va maintenant être décrit en regard des dessins annexés, sur lesquels :
- La Figure 1 représente la section d'un cercle de monture de lunettes;
- la Figure 2 représente le même cercle de monture en vue de face;
- la Figure 3 représente schématiquement en perspective les parties concernées par l'invention d'une machine classique de meulage de verres de lunettes;
- la Figure 4 représente l'adaptation du verre biseauté dans un drageoir ouvert à 120°;
- la Figure 5 représente l'interférence du verre biseauté avec un drageoir ouvert à moins de 120°;
- la Figure 6 représente un ensemble à deux palpeurs suivant l'invention;
- les Figures 7 et 8 illustrent l'étalonnage de l'ensemble à deux palpeurs;
- la Figure 9 illustre le palpage réalisé au moyen de cet ensemble;
- la Figure 10 est une vue partielle en perspective, analogue à la Figure 3, illustrant la phase initiale du palpage au moyen du palpeur fin;
- la Figure 11 est une vue analogue illustrant une phase ultérieure du palpage au moyen du palpeur fin; et
- la Figure 12 est une vue analogue illustrant le palpage au moyen du palpeur épais.

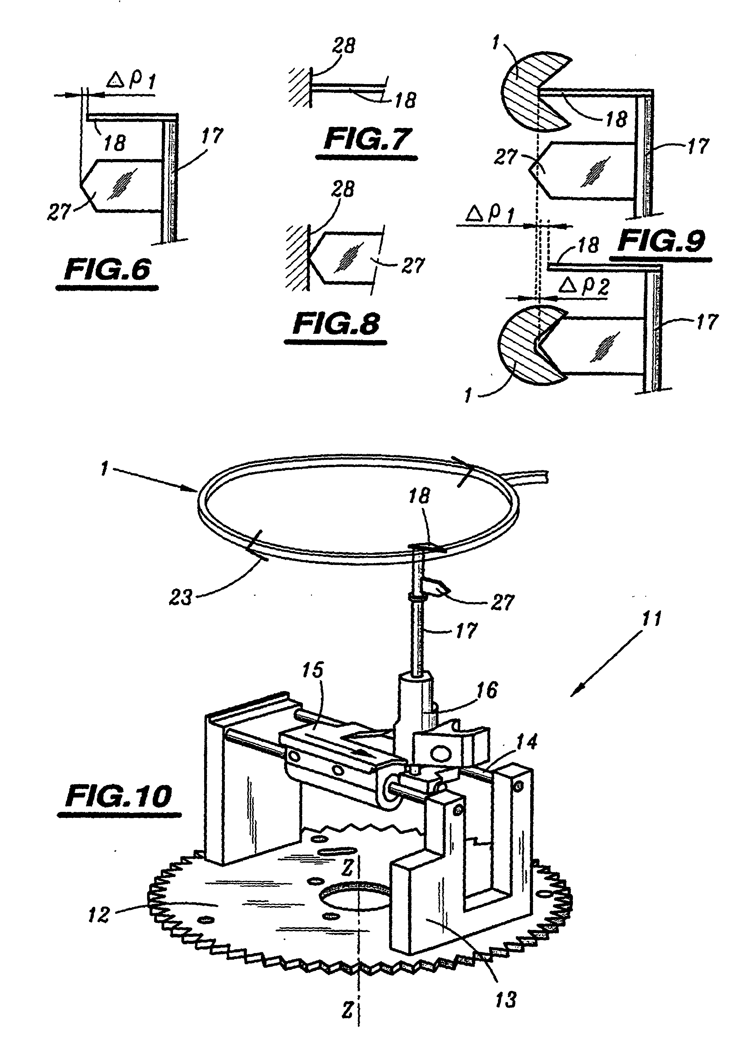

Comme représenté sur les Figures 6 à 12, l'appareil 11 est modifié par l'ajout sur la tige 17, à une certaine distance au-dessous du palpeur 18, d'un palpeur additionnel 27 épais (dans le sens vertical) dont le profil vertical est en V ouvert à 120°, c'est-à-dire conjugué de celui de la gorge de biseautage standard 7.

Le palpage s'effectue alors de la manière suivante.

On étalonne l'appareil 11 en positionnant le plateau 12 dans une position angulaire prédéterminée, puis en amenant successivement les palpeurs 18 et 27 au contact d'une même surface de référence 28 parallèle à l'axe Z-Z (Figures 7 et 8). Le capteur 20 envoie alors à l'unité 22 un signal représentatif de l'écart Δρ1 entre les pointes des deux palpeurs. Cette opération est ensuite effectuée à des intervalles de temps choisis par l'opérateur, par exemple après un nombre prédéterminé N de cycles de palpage.

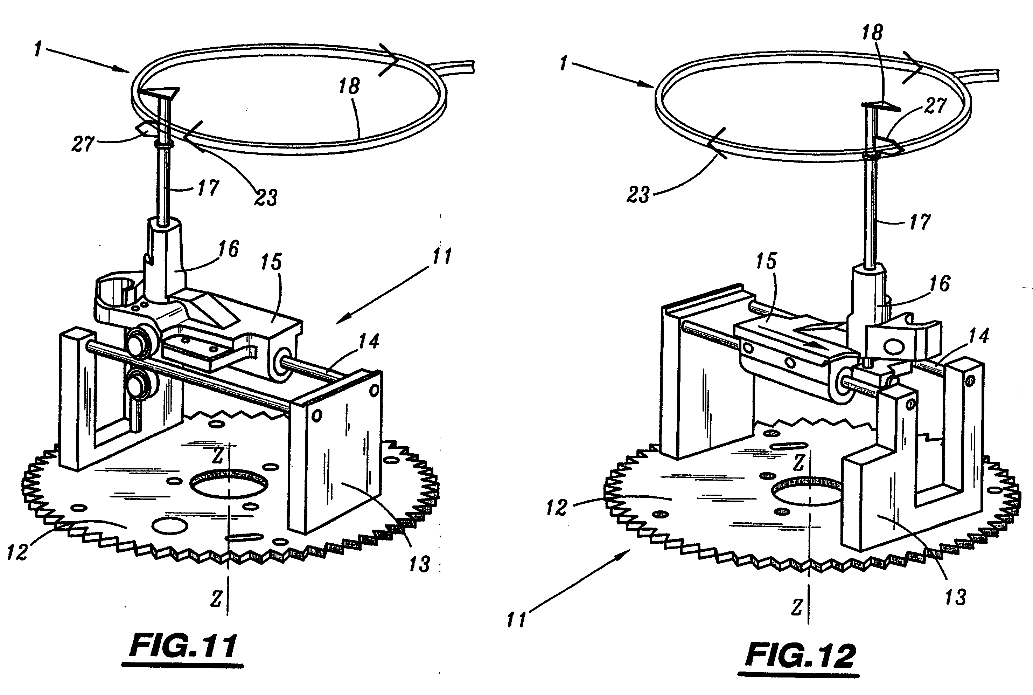

Puis, un cercle de monture 1 étant positionné dans les pinces 23 comme précédemment, un premier palpage au moyen du palpeur 18 est effectué comme décrit ci-dessus, avec ce palpeur au contact du fond 3 du drageoir (Figures 9 à 11). La Figure 10 représente la position de départ du palpeur 18 lors de ce palpage, et la Figure 11 une position ultérieure, à peu près à 180° de la précédente.

Ensuite, le plateau 12 et le coulisseau 15 étant revenus à leurs positions initiales, la tige 17 est soulevée de manière à amener le palpeur 27 sensiblement dans le plan du drageoir. Puis le coulisseau est déplacé pour amener le palpeur 27 au contact du drageoir (Figures 9 et 12).

Si le drageoir est ouvert à 120° ou plus, la pointe du palpeur 27 touchera le fond du drageoir, et la différence de déplacement du chariot sera égale à la grandeur Δρ1 précitée de la Figure 6.

En revanche, si l'ouverture du drageoir est inférieure à 120°, comme illustré sur la Figure 9, le palpeur 27 ne pénétrera pas complètement dans le drageoir, et sa position correspondra à celle du verre biseauté par la gorge 7.

La différence de déplacement radial des deux palpeurs, notée Δρ2, est fournie à l'unité 22 par le capteur 20, et la commande du chariot porte-verre par les moyens 10 s'effectuera en fonction d'une part des résultats du premier palpage, et d'autre part des grandeurs Δρ1 et Δρ2.

De cette manière, le verre biseauté s'adaptera toujours dans le drageoir, quel que soit son angle d'ouverture ou même la forme de sa section, sans qu'aucune reprise du verre soit nécessaire.

Il est à noter que seul le premier palpeur fin 18, qui reste sans difficulté dans le drageoir pendant la rotation du plateau 12, frotte sur le cercle de monture et s'use, ce qui est pris en compte par l'étalonnage décrit plus haut en regard des Figures 7 et 8. Au contraire, le palpeur épais 27 ne fait qu'entrer en contact avec le cercle de monture i en un point, sans mouvement relatif entre ce palpeur et le cercle 1. Le palpeur épais n'a donc pas tendance à sortir du drageoir et ne subit aucune usure.

En variante, on peut faire tourner le palpeur 27 sur un petit angle, par exemple de 1 à 2°, afin d'obtenir un ensemble de mesures dont on fait la moyenne. Ceci permet d'éviter tout risque d'obtenir une mesure ponctuelle aberrante.

## Revendications

1. Procédé de palpage d'un drageoir (2) d'un cercle (1) de monture de lunettes, en vue de fournir des données représentatives du contour du drageoir à une machine de meulage de verres de lunettes qui comprend une meule de biseautage (6) ayant une gorge de biseautage (7) de profil standard,
du type dans lequel on positionne le cercle de monture (1), on introduit un palpeur fin (18) dans le drageoir (2), suivant une orientation radiale prédéterminée (24) par rapport à un axe de rotation prédéterminé (Z-Z), jusqu'au contact du palpeur avec le fond (3) du drageoir, et on fait effectuer au palpeur une révolution autour de cet axe en assurant, au moins pour une série prédéterminée d'orientations radiales, le contact du palpeur avec le fond du drageoir,
**caractérisé en ce que**, en outre, on introduit en un point prédéterminé du pourtour du drageoir (2) un second palpeur (27) dont le profil est sensiblement conjugué de celui de ladite gorge, et on fournit à la machine de meulage une information représentative de la différence (Δρ2) de pénétration des pointes des deux palpeurs dans le drageoir audit point prédéterminé.

2. Procédé suivant la revendication 1, **caractérisé en ce qu'**on mesure au préalable la position relative (Δρ1) des pointes des deux palpeurs (18, 27) en les amenant successivement au contact d'une même surface de référence (28) parallèle audit axe (Z-Z), et on fournit à la machine de meulage une information représentative de cette position relative.

3. Procédé suivant la revendication 1 ou 2, **caractérisé en ce que** les deux palpeurs (18, 27) sont solidaires d'une même tige-support (17) parallèle audit axe (Z-Z) et mobile longitudinalement, et **en ce qu'**on amène successivement les deux palpeurs au niveau du drageoir (2) audit point commun de pénétration.

4. Appareil de palpage de montures de lunettes, du type comprenant : des moyens (23) de positionnement d'un cercle de monture (1); un palpeur fin (18) porté par un support de palpeur (17); des moyens pour déplacer le support de palpeur autour d'un axe de rotation (Z-Z), suivant cet axe et radialement par rapport à cet axe; et des moyens (19 à 21) pour mesurer, pour chaque position angulaire du support de palpeur (17), le déplacement de ce support radialement, et éventuellement suivant l'axe de rotation, jusqu'au contact du palpeur (18) avec le fond (3) du drageoir (2) du cercle de monture (1),
**caractérisé en ce qu'**il comprend en outre un second palpeur (27) ayant un profil sensiblement conjugué de celui d'une gorge standard (7) de biseautage de verres de lunettes, et des moyens pour introduire ce second palpeur en un point prédéterminé du pourtour du drageoir.

5. Appareil suivant la revendication 4, **caractérisé en ce que** les deux palpeurs (18, 27) sont portés par le même support de palpeur (17) et décalés l'un par rapport à l'autre suivant ledit axe de rotation (Z-Z).

6. Appareil suivant la revendication 5, **caractérisé en ce que** le support (17) est une tige montée coulissante suivant ledit axe de rotation (Z-Z) par rapport à un chariot (15), ce chariot étant monté mobile radialement sur un plateau (12) rotatif autour dudit axe.

7. Appareil suivant la revendication 6, **caractérisé en ce qu'**il comprend des moyens (19 à 22) pour fournir à la machine de meulage une information représentative de la différence (Δρ2) de pénétration des pointes des deux palpeurs (18, 27) dans le drageoir (2) audit point prédéterminé.

8. Appareil suivant la revendication 7, **caractérisé en ce qu'**il comprend des moyens d'étalonnage adaptés pour amener successivement les deux palpeurs (18, 27) au contact d'une même surface de référence (28) parallèle audit axe (Z-Z), et des moyens (20) pour en déduire la position relative (Δρ1) des pointes des deux palpeurs.

9. Machine de meulage de verres de lunettes, du type comprenant un train de meules (4) qui comporte une meule de biseautage (6) ayant une gorge standard de biseautage (7), un chariot porte-verre à meuler, des moyens (10) de commande du chariot adaptés pour amener le verre à meuler au moins sur la meule de biseautage (6), et un appareil (11) de palpage de montures de lunettes adapté pour fournir auxdits moyens de commande des données représentatives du contour du drageoir (2) d'un cercle de monture(1), **caractérisée en ce que** l'appareil de palpage (11) est conforme à l'une quelconque des revendications 4 à 8.

10. Machine suivant la revendication 9, **caractérisée en ce que** l'appareil de palpage (11) est intégré à la machine.

## Patentansprüche

1. Verfahren zum Abtasten einer Nut (2) eines Brillengestellringes (1), um einer Maschine zum Schleifen von Brillengläsern, die eine Facettierungsschleifscheibe (6) umfasst, die eine Facettierungsauskehlung (7) mit Standardprofil aufweist, Daten zu liefern, die für die Kontur der Nut repräsentativ sind,
von der Art, bei welcher der Gestellring (1) angeordnet wird, ein Feintaster (18) in die Nut (2) entlang einer im Verhältnis zu einer vorherbestimmten Drehachse (Z-Z) vorherbestimmten radialen Ausrichtung (24) bis zum Kontakt des Tasters mit dem Grund (3) der Nut eingeführt wird, und der Taster veranlasst wird, eine Umdrehung um diese Achse auszuführen, wobei für mindestens eine Reihe vorherbestimmter radialer Ausrichtungen der Kontakt des Tasters mit dem Grund der Nut sichergestellt wird,
**dadurch gekennzeichnet, dass** außerdem an einem vorherbestimmten Punkt des Umfangs der Nut (2) ein zweiter Taster (27) eingeführt wird, dessen Profil im Wesentlichen demjenigen der Auskehlung zugeordnet ist, und der Schleifmaschine eine Information geliefert wird, die für den Unterschied (Δρ2) des Eindringens der Spitzen der beiden Taster in die Nut an dem vorherbestimmten Punkt repräsentativ ist.

2. Verfahren nach Anspruch 1, **dadurch gekennzeichnet, dass** zuvor die relative Stellung (Δρ1) der Spitzen der beiden Taster (18, 27) gemessen wird, indem sie nacheinander mit ein und derselben, zu der Achse (Z-Z) parallelen Bezugsfläche (28) in Kontakt gebracht werden, und der Schleifmaschine eine für diese relative Stellung repräsentative Information geliefert wird.

3. Verfahren nach Anspruch 1 oder 2, **dadurch gekennzeichnet, dass** die beiden Taster (18, 27) mit ein und derselben, zu der Achse (Z-Z) parallelen Trägerstange (17) einstückig und in Längsrichtung beweglich sind, und dass die beiden Taster nacheinander auf die Höhe der Nut (2) an dem gemeinsamen Eindringungspunkt gebracht werden.

4. Vorrichtung zum Abtasten von Brillengestellen, von der Art umfassend: Mittel (23) zum Anordnen eines Gestellringes (1); einen Feintaster (18), der von einem Tasterhalter (17) getragen ist; Mittel zum Verschieben des Tasterhalters um eine Drehachse (Z-Z), entlang dieser Achse und radial zu dieser Achse; und Mittel (19 bis 21), um für jede Winkelstellung des Tasterhalters (17) die Verschiebung dieses Halters radial und gegebenenfalls entlang der Drehachse bis zum Kontakt des Tasters (18) mit dem Grund (3) der Nut (2) des Gestellringes (1) zu messen,
**dadurch gekennzeichnet, dass** sie außerdem einen zweiten Taster (27), der ein Profil aufweist, das im Wesentlichen dem einer Standardauskehlung (7) zur Facettierung von Brillengläsern zugeordnet ist, und Mittel zum Einführen dieses zweiten Tasters an einem vorherbestimmten Punkt des Nutumfangs umfasst.

5. Vorrichtung nach Anspruch 4, **dadurch gekennzeichnet, dass** die beiden Taster (18, 27) von demselben Tasterhalter (17) getragen und gegeneinander entlang der Drehachse (Z-Z) versetzt sind.

6. Vorrichtung nach Anspruch 5, **dadurch gekennzeichnet, dass** der Halter (17) eine Stange ist, die entlang der Drehachse (Z-Z) im Verhältnis zu einem Schlitten (15) gleitend angebracht ist, wobei dieser Schlitten radial beweglich auf einer um die Achse drehbaren Scheibe (12) angebracht ist.

7. Vorrichtung nach Anspruch 6, **dadurch gekennzeichnet, dass** sie Mittel (19 bis 22) umfasst, um der Schleifmaschine eine Information zu liefern, die für den Unterschied (Δρ2) der Eindringung der Spitzen der beiden Taster (18, 27) in die Nut (2) an dem vorherbestimmten Punkt repräsentativ ist.

8. Vorrichtung nach Anspruch 7, **dadurch gekennzeichnet, dass** sie Mittel zum Kalibrieren, die geeignet sind, um die beiden Taster (18, 27) nacheinander mit ein und derselben, zu der Achse (Z-Z) parallelen Bezugsfläche (28) in Kontakt zu bringen, und Mittel (20), um daraus die relative Stellung (Δρ1) der Spitzen der beiden Taster abzuleiten, umfasst.

9. Maschine zum Schleifen von Brillengläsern, von der Art umfassend ein Schleifscheibengestell (4), das eine Schleifscheibe zum Facettieren (6) mit einer Standardfacettierungsauskehlung (7) umfasst, einen das zu schleifende Glas tragenden Schlitten, Mittel (10) zum Steuern des Schlittens, die geeignet sind, um das zu schleifende Glas mindestens an die Facettierungsschleifscheibe (6) heranzubringen, und eine Vorrichtung (11) zum Abtasten von Brillengestellen, die geeignet ist, um den Steuermitteln Daten zu liefern, die für die Kontur der Nut (2) eines Gestellringes (1) repräsentativ sind, **dadurch gekennzeichnet, dass** die Vorrichtung zum Abtasten (11) einem der Ansprüche 4 bis 8 entspricht.

10. Maschine nach Anspruch 9, **dadurch gekennzeichnet, dass** die Vorrichtung zum Abtasten (11) in die Maschine integriert ist.

## Claims

1. Method of tracing a bezel (2) in a ring (1) of a spectacle frame so as to supply data representing the contour of the bezel to a machine for grinding spectacle lenses which comprises a bevelling wheel (6) having a bevelling groove (7) of standard profile,
of the type wherein the frame ring (1) is put into position, a fine tracer (18) is placed in the bezel (2) in a predetermined radial orientation (24) relative to a predetermined axis of rotation (Z-Z) until the tracer makes contact with the base (3) of the bezel, and the tracer is rotated about this axis while ensuring that the tracer remains in contact with the base of the bezel, at least for a predetermined series of radial orientations,
**characterised in that**, in addition, a second tracer (27) is introduced at a predetermined point on the periphery of the bezel (2), the profile of said second tracer being substantially conjugate with that of said groove, and the grinding machine is supplied with data representing the difference (Δρ2) in penetration of the tips of the two tracers in the bezel at said predetermined point.

2. Process according to claim 1, **characterised in that** first of all the relative position (Δρ1) of the tips of the two tracers (18, 27) is measured by bringing them successively into contact with the same reference . surface (28) parallel to said axis (Z-Z), and the grinding machine is supplied with data representing this relative position.

3. Process according to claim 1 or 2, **characterised in that** the two tracers (18, 27) are integral with the same support rod (17) which is parallel to said axis (Z-Z) and longitudinally movable, and **in that** the two tracers are successively brought level with the bezel (2) at said common point of penetration.

4. Apparatus for tracing spectacle frames of the type comprising: means (23) for positioning a frame ring (1); a fine tracer (18) carried by a tracer support (17); means for moving the tracer support about an axis of rotation (Z-Z), along this axis and radially with respect to said axis; and means (19 to 21) for measuring, for each angular position of the tracer support (17), the movement of this support radially, and. optionally along the axis of rotation, until the tracer (18) makes contact with the base (3) of the bezel (2) in the frame ring (1),
**characterised in that** it further comprises a second tracer (27) having a profile substantially conjugate with that of a standard bevelling groove (7) for spectacle lenses, and means for introducing this second tracer at a predetermined point on the periphery of the bezel.

5. Apparatus according to claim 4, **characterised in that** the two tracers (18, 27) are carried by the same tracer support (17) and offset relative to one another along said axis of rotation (Z-Z).

6. Apparatus according to claim 5, **characterised in that** the support (17) is a rod mounted to be slidable along said axis of rotation (Z-Z) relative to a carriage (15), said carriage being mounted to be radially movable on a plate (12) rotating about said axis.

7. Apparatus according to claim 6, **characterised in that** it comprises means (19 to 22) for supplying the grinding machine with data representing the difference (Δρ2) in penetration of the tips of the two tracers (18, 27) in the bezel (2) at said predetermined point.

8. Apparatus according to claim 7, **characterised in that** it comprises calibrating means adapted to bring the two tracers (18, 27) successively into contact with the same reference surface (28) parallel to said axis (Z-Z), and means (20) for deducing therefrom the relative position (Δρ1) of the tips of the two tracers.

9. Machine for grinding spectacle lenses, of the type comprising a series of grinding wheels (4) which comprises a bevelling wheel (6) having a standard bevelling groove (7), a carriage for carrying the lens to be ground, means (10) for controlling the carriage which are adapted to bring the lens to be ground at least up to the bevelling wheel (6), and an apparatus (11) for tracing spectacle frames adapted to supply said control means with data representing the contour of the bezel (2) of a frame ring (1), **characterised in that** the tracing apparatus (11) conforms to any one of claims 4 to 8.

10. Machine according to claim 9, **characterised in that** the tracing apparatus (11) is integrated in the machine.
